# EUROPEAN PATENT APPLICATION

(11) **EP 4 803 351 A1**
(43) Date of publication of application: **09.09.2026**
(21) Application number: 25162332.8
(22) Date of filing: 07.03.2025
(51) Int. Cl.: B60L 53/16

(54) **CONNECTION ARRANGEMENT**

(71) Applicant: Volvo Car Corporation, 405 31 Göteborg (SE)
(72) Inventor: HASSELGREN, Lennart, 40531 Göteborg (SE); FORSBERG, Fredrik, 40531 Göteborg (SE)
(74) Representative: Kransell & Wennborg KB

(57) **Abstract**

The disclosure relates to a connection arrangement (100, 200), comprising one or more power conductors (70) configured for transferring a charging current between a charger (1200) and an electric vehicle (1100); and a communication conductor (110, 210), wherein the communication conductor (110, 210) comprises a coaxial configuration with an inner conductor portion (111, 211) configured for transmitting a first communication signal between the charger (1200) and the electric vehicle (1100) and an outer conductor portion (113, 213) configured for transmitting a second communication signal between the charger (1200) and the electric vehicle (1100), wherein the first communication signal and the second communication signal are configured for managing the transfer of the charging current between the charger (1200) and the electric vehicle (1100).

## Description

### TECHNICAL FIELD

The present disclosure relates to a connection arrangement, a system comprising the connection arrangement, and a use of the connection arrangement.

### BACKGROUND

Electric vehicles have become increasingly popular in recent years, and with this growth comes the need for efficient and versatile charging systems. One such system is the Combined Charging System, CCS, which has gained widespread adoption. The CCS2 standard, a variant of CCS, is designed to support both AC and DC charging, making it a flexible solution for electric vehicle charging.

The CCS2 charging system is now evolving to include bidirectional AC charging capabilities, which allows for both charging the vehicle's battery and feeding energy back to the grid.

### SUMMARY

However, it has been found by the inventors that the implementation of bidirectional charging presents some technical challenges that are not limited to CCS charging systems.

In traditional Mode 3 AC charging, communication between the vehicle and the charging station occurs through Pulse Width Modulation, PWM, signaling. This signaling takes place via the Control Pilot, CP, wire, using the Protective Earth, PE, wire in the charging cable as a return path. While this setup works well for unidirectional charging, the inventors have found that it has limitations when it comes to bidirectional charging.

The main issue that was found with the Mode 3 charging method is that the uncontrolled wiring can lead to high levels of crosstalk between the signal (or, in other words, communication) and power lines.

Generally, crosstalk occurs when an electrical signal in one circuit or channel creates an undesired effect in another circuit or channel. To mitigate this problem in Mode 3 charging, strict low-pass filtering may be applied to the CP signal, keeping it below 150 kHz.

However, when shifting to bidirectional charging, the signaling (or, in other words, communication) method changes dramatically. Instead of PWM, Power Line Communication, PLC, is typically being used. PLC operates at a much higher frequency range, typically between 1.8 and 28 MHz. The higher frequency range can typically not be filtered out without compromising the functionality of the charging system.

It has been found by the inventors that the introduction of PLC for bidirectional charging creates a new challenge. The high-frequency PLC signals can cause significant crosstalk with the AC power side through the charging cable. This crosstalk is likely to be interpreted as noise on the AC side, potentially leading to failures in electromagnetic compatibility, EMC, tests during vehicle type approval processes, such as those specified in UN ECE R10 regulations. Moreover, the signal transmission losses will be greatly reduced, leading to a more robust communication system.

The above problem is at least partially solved or alleviated by the subject matter of the independent claims of the present disclosure, wherein further examples are incorporated in the dependent claims.

According to a first aspect, there is provided a connection arrangement, in particular for an electric vehicle. The connection arrangement may comprise one or more power conductors configured for transferring a charging current between a charger and an electric vehicle. The connection arrangement comprises a communication conductor, wherein the communication conductor comprises a coaxial configuration with an inner conductor portion configured for transmitting a first communication signal between the charger and the electric vehicle, and an outer conductor portion configured to transmitting a second communication signal between the charger and the electric vehicle. The first communication signal and the second communication signal may be configured for managing the transfer of the charging current between the charger and the electric vehicle.

The connection arrangement allows to reduce the crosstalk between signal or, in other words, communication and power conductors. This allows implementing bidirectional charging in CCS2 systems using e.g. PLC without the above described issues, specifically being sufficient in terms of EMC for compliance.

Essentially, the connection arrangement of this disclosure omits the known design of dual wire signal transfer, where the CP wire is used for the first communication signal, and the PE wire, which is a separate wire from the CP wire, is used for the second communication signal. Instead of this known design, a coaxial configuration of conductor portions is provided such that a coaxial transfer of communication signals is achieved in the coaxial configuration. In this regard, the communication conductor generally refers to a conductor structure for communication or signaling of the first communication signal and the second communication signal as herein explained. This communication conductor has two conductor portion, an inner conductor portion and an outer conductor portion, both of which may be embodied as, comprising and/or connected to a line, lead, wire, pin, and/or similar. In this regard, the communication conductor can be alternatively referred to as a dual communication structure or device with two conductor portions, one of which may be an inner part or wire and the outer one may be an outer part or wire surrounding the inner part or wire in the coaxial configuration. The coaxial configuration may in particular but not limited thereto be in the form of a coaxial cable.

It is noted that the connection arrangement as proposed herein is not limited to any specific charging standards, charging modes, or countries or markets. As described further herein, for AC bidirectional charging in Mode 3, with the communication conductor, in particular in the form of a wire shield of the coaxial configuration, and the conductive connectors, in particular on opposite ends of the connection arrangement, the signal impact on power can be minimized and compliance failure on this aspect can be minimized. Similarly, the signal impact can be minimized with the coaxial configuration of communication conductor and protective earth conductor.

Additionally, in AC charging Mode 3, the proposed connection arrangement may provide for an improved margin and good signaling.

Also, for DC charging Mode 4, the connection arrangement may be advantageous as it may provide a shielded PLC signal that is thus robust towards ambient noise. Thereby, a big filter in the high voltage battery of electric vehicles may be reduced in size, which eases manufacturing of the electric vehicle in terms of costs and complexity. Also, the short-wave radio communication band up to 28 MHz can be protected. The same advantages can be achieved for DC bidirectional charging.

The conductors mentioned herein may be any lines, leads, cables, wires, pins or similar or may be connected to pins or ends for connection to any device or system as discussed herein. As described herein, these conductors may be configured or used for different functionality, e.g. for communication signal transmission, for power transmission, as protective earth connection, etc. And, these conductors, specifically in the case of the communication conductor, may not be limited to a single path of transfer or a single lead, line, wire or similar but may include also two or more signal paths, which may be opposite, and provided by different conductor portions. According to different charging standards, such as CCS, these conductors, in particular pins, may have different names in the standard or art, that are used herein as non-limiting examples.

The communication signals are herein merely referred to as first and second communication signals to distinguish them from one another to describe the functionality that the conductors of the coaxial configuration provide, which relates to the second communication signal. Both communication signals may be electrical signals, in particular of a certain voltage. The first communication signal may alternatively be referred to as a sent communication signal. This communication signal may be specifically sent from the charger to the electric vehicle, in particular from a transceiver of the charger to a transceiver of the electric vehicle. The first communication signal may in particular be a communication signal that is transferred in a first direction by the inner conductor portion, which may be a CP wire in the coaxial configuration. The second communication signal may be alternatively referred to as a return communication signal. The second communication signal may be sent as a response to the first communication signal. The second communication signal may be the return path or reference for first communication signal. The second communication signal may be the same signal as the first communication signal but 180 degrees out of phase, particularly in a second direction opposed the first direction. As further explained herein, the outer conductor portion may be at least partially shared by other functions, for instance PE. The first communication signal may be received at the transceiver of the electric vehicle and sent back as the second or return communication signal to the transceiver of the charger. Consequently, a communication signaling process is formed by the two communication signals.

In more detail, in electric vehicle charging, the communication signaling, specifically the CP signal, is a communication mechanism between the electric vehicle and the Electric Vehicle Supply Equipment, EVSE, which refers to the charger. This communication mechanism is used for the management of the transfer of the charging current from the charger to the electric vehicle or the other way in case of bidirectional charging. The management of the charging current transfer may for example but not limited thereto include initiating the charging process, stopping the charging process, controlling one or more parameters of the charging process, such as charging current, and similar. The control pilot signal may for example use a Pulse Width Modulation, PWM, protocol to exchange information and ensure safe and efficient charging. The EVSE may generate a PWM signal of e.g. 1 kHz that alternates e.g. between +12 V and -12 V. This first communication signal can be transmitted through the CP pin of the charging connector. The return path for this signal can be through the PE pin, which can be grounded on both the EVSE and electric vehicle. When the charging cable is connected, a transceiver, which may comprise a resistor and diode circuit, on the vehicle may modify the CP signal voltage of the first communication signal or, in other words, sent communication signal. This can create a potential divider circuit between the EVSE's 12 V source and the resistors in the vehicle's On-Board Charger, OBC. Specific voltage levels across CP-PE may indicate different states of connection and readiness. For example: +12 V: no vehicle connected (state A); +9 V: vehicle detected but not ready to charge (state B); +6 V: vehicle requests charging (state C); and +3 V: charging with ventilation required (state D). The CP signal can communicate the maximum current available from the EVSE via the PWM duty cycle and the vehicle's readiness to charge by modifying resistance values on its side. For example, a 50% duty cycle corresponds to 30 A, while a 25% duty cycle corresponds to 16 A. The electric vehicle can read this duty cycle to determine how much current it can safely draw. The diode in the vehicle's circuit can block negative voltage, ensuring that only positive pulses are processed. If abnormal conditions occur (e.g., incorrect resistance or unexpected current flow), the EVSE can enter an error state and halt charging for safety. Accordingly, for example, the first communication signal or sent signal may be a PWM square wave alternating between e.g. +12 V and -12 V and of e.g. 1 kHz, which may be sent from the EVSE through the CP pin to the electric vehicle. The duty cycle of this signal communicates the maximum charging current allowed.

Additionally, PLC generally plays an important role in bidirectional charging for electric vehicles. PLC generally uses the existing electrical power conductors or lines to transmit data between the EV and the charger or EVSE. This eliminates the need for additional communication cables. For bidirectional communication, PLC enables two-way communication, allowing the EV and the EVSE to exchange information. This allows negotiating charging parameters, such as the rate and duration of charging, as well as for managing the flow of electricity back to the grid during vehicle-to-grid, V2G, operations. The same communication concept can also be used for DC charging (Mode 4 charging). The communication is typically governed by standards like ISO 15118 and DIN 70121, which specify the protocols and power spectral density limits for PLC signals. These standards ensure reliable and secure communication, minimizing interference and signal degradation. PLC can facilitate the authentication of the EV by the utility provider, ensuring that only authorized vehicles can access the charging infrastructure. This is relevant for secure and efficient energy management. Overall, PLC communication is an enabler for smart and efficient bidirectional charging, supporting the integration of EVs into the energy grid and enhancing the overall user experience.

For the basic communication, CP signaling, which is part of the SAE J1772 standard, provides basic communication between the EV and the EVSE. It can primarily handle the initial handshake, safety checks, and basic charging control. CP signals can indicate the charging state (e.g., connected, ready, charging) and can control the charging current by varying the duty cycle of the signal. These can also be understood as non-limiting examples of the managing of the transfer of the charging current between the charger and the electric vehicle. Compared to CP signaling, PLC is typically used for more advanced communication needs, such as negotiating charging parameters, managing bidirectional power flow, and exchanging data for smart grid integration. PLC can transmit data over the same power conductors, in particular lines, used for charging, enabling high-speed, reliable communication without additional wiring.

CP and PLC can be integrated with one another. For an initial handshake, when an EV connects to the EVSE, CP signaling can initiate the connection and perform safety checks. Once the basic connection is established, the system may switch to PLC for more detailed communication. This can include negotiating charging rates, managing energy flow, and authenticating the vehicle. CP can continue to provide real-time status updates and basic control signals, while PLC handles more complex data exchanges and control commands. By combining CP and PLC, the system can ensure both basic safety and advanced functionality, enabling efficient and secure bidirectional charging.

In an example, the connection arrangement may comprise one or more conductive connectors. The one or more conductive connectors may connect a protective earth conductor of the connection arrangement with the outer conductor portion for transmitting the second communication signal. In particular, the second communication signal may be thereby transmitted in a dedicated continuous communication signal return. In particular, the second communication signal may be conveyed by the protective earth conductor returning the transmitted first communication signal as second communication signal to the source. Further, the second communication signal may be transmitted from the protective earth conductor to the outer conductor portion for transmitting the second communication signal, particularly in the second direction opposite to the first direction. Thereby, the connection arrangement may provide a continuous communication signal return using the combination of the outer conductor as shield, the conductive connectors, and the protective earth conductor.

The conductive connector may alternatively be referred to as a conductive adapter. While the conductive connector conductively connects the outer conductor portion of the communication conductor to the protective earth conductor, the term conductive adapter refers to the structural configuration of such connector as an "adapter" designed to facilitate the transmission of a communication signal between the respective conductors. The terms power conductors, PE conductor and communication conductor refer to the functional and/or structural configuration of the respective conductors for respectively transferring power, function for PE, and transmitting the communication signals. The connection arrangement may alternatively be referred to as a charging arrangement.

In an example, the connection arrangement may be comprised in the electric vehicle, the charger, a charging cable, and/or a charging connector. Accordingly, the connection arrangement may be implemented in any one of the electric vehicle, the charger, the charging cable or the charging connector or in between any one of these. The electric vehicle may be any of a fully electric vehicle with a battery and electric machine for propulsion or a hybrid electric vehicle comprising a battery and further another propulsion system such as an internal combustion engine or fuel cell, for example. The charger can for example be a wall box (e.g. wall-mounted) or a charging station or column (e.g. public or commercial). The charging cable is the actual cable that connects the charger to the electric vehicle, and which may have charging connectors attached to its ends for plugging in the charging cable with the charging connectors into the electric vehicle and/or the charger.

In an example, the one or more conductive connectors may be located at a connection portion of the connection arrangement connecting the electric vehicle to a charging connector, the charger to the charging connector, a charging cable to the charging connector, the charging connector to the electric vehicle or the charger, or the outer conductor portion to a transceiver inside the electric vehicle and/or inside the charger. The connection portion in which the one or more conductive connectors are located may thus be located in different locations among the different connections of the devices or systems mentioned herein. The connection portion may be the portion, where the respective connection is being established.

In an example, conductive connectors may be located at opposite end portions of a charging cable. In particular, the charging arrangement may comprise two conductive connectors, each one of the two conductive connectors being located at one of two opposite end portions of the charging cable, and each one of the two conductive connectors connecting the protective earth conductor with the outer conductor portions of the communication conductor at their respective end portion.

In an example, the coaxial configuration may be a coaxial cable comprising the inner conductor portion and the outer conductor portion forming a shield, and wherein the one or more conductive connectors are connected to the outer conductor portion of the coaxial cable. The inner conductor portion may in particular be a lead or a wire, whereas the outer conductor portion may be a hollow lead or wire surrounding the inner conductor portion about its circumference. The inner conductor portion may be isolated from the outer conductor portion by an isolating layer in between. Accordingly, the outer conductor or shield can be advantageously used in the communication conductor to transmit the second communication signal, while the inner conductor can be used for transmission of the first communication signal.

In an example, the one or more conductive connectors may be crimped or clipped to the outer conductor portion of the coaxial configuration. Thereby, a stable connection interface may be provided for improved signal transmission.

In an example, the one or more conductive connectors, specifically at the crimped or clipped part thereof, may be connected to a resistor. In particular, the resistor may be from a Proximity Pilot, PP, conductor, in particular connected to a PP conductor, in particular a PP pin. The PP conductor may generally have the function of charge cable detection and/or current limitation. The PP resistor connection to the protective earth conductor or pin may be crimped together with the protective earth conductor during assembly, thereby providing a mechanical fixture. This simplifies assembly, because the conductive connector can hold both the communication, in particular CP or PLC, conductor and the PP conductor in place when inserted in the pins where they can be finally crimped.

In an example, a stand-off ring may be located or provided opposite of the crimped or clipped portion of the one or more conductive connectors. Using the inner stand-off ring provides a mechanical stand-off during crimping or clipping, which can protect the communication conductor from damage. The size of a flange portion of the inner stand-off ring may be wider than a crimping ring or clipping part of the conductive connector, thereby avoiding an overlap. A tubular length of the inner stand-off ring may be substantially matching the length of the crimping ring or clipping part.

In an example, each one of the one or more conductive connectors may comprise a length in the range of 2 to 50 mm. Specifically, the length may be in the range of 4 to 40 mm, more particularly in the range of 6 to 30 mm, e.g. around 8 to 12 mm. With such short length, e.g. 10 mm, the conductive connector has been found to be sufficiently sized for transmitting the return transmission signal while not adding much cost or weight to the connection arrangement.

In an example, the one or more conductive connectors may be made from an electrically conductive material sheet. The electrically conductive material sheet may comprise a folded geometry. The folded geometry may be such that it includes a crimping ring or clipping part for the crimping or clipping. Thereby, a simple yet effective manufacturing process for the conductive connectors from the sheet is provided. The sheet or generally the conductive connectors may be made from copper and/or aluminum as electrically conductive material, for example.

In an example, the outer conductor portion may be configured as a protective earth conductor for connecting a chassis of the electric vehicle to the charger. The second communication signal may in particular be received by the protective earth conductor, in particular in the form of or connected to an earth connector pin, in response to the transmitted first communication signal. The transmitting of the second communication signal may in particular be in the second direction opposite to the first direction. The protective earth line may in particular be dimensioned to maintain its safety function, and it may be connected to a protective earth pin at opposite ends. The signal return through the connector may be made by using the protective earth pins.

In an example, the connection arrangement may comprise a split segment, in which the coaxial configuration of the inner conductor portion and outer conductor portion are adapted for connecting an end of the outer conductor portion to a protective earth pin and an end of the inner conductor portion to a communication pin. These pins may consequently be used for establishing the connection to the respective device or system to which they connect. For example, if the connection arrangement is comprised in the charging cable, the protective earth conductor pin and communication conductor pin may be provided inside the charging connector for consequently connecting these via the charging connector to the electric vehicle and/or the charger. In particular, the split segment may comprise an interior space for routing the inner conductor portion out of the coaxial arrangement, which may be in the form of a coaxial cable. A tube, e.g. from metal, may be provided around this interior space, which may be part of a modified ground pin. This tube with sufficient mechanical strength may be providing a standoff, which may be used for crimping. The split segment may comprise a side aperture or hole for routing the inner conductor portion out and connect it to a communication pin. Also, the split segment may be provided with a slanted interior surface allowing a simplified feed through of the inner conductor portion during assembly. Further, an external crimping ring for connecting the protective earth conductor to the respective pin may be provided in the coaxial configuration.

In an example, the connection arrangement may be configured according to a combined charging system, CCS, standard, in particular but not limited to CCS2 standard. Here, the communication conductor may be configured as a CCS control pilot and/or Power Line Communication, PLC, conductor.

In an example, the outer conductor portion may be configured for transmitting the second communication signal in the form of a PLC signal in a frequency range of 1.8 to 28 MHz.

In an example, the outer conductor portion may be configured for transmitting the second communication signal during AC bidirectional charging and/or DC charging.

Similarly, any of the devices or systems mentioned herein, such as the electric vehicle or charger, may be correspondingly configured according to the CCS standard, for transmitting or receiving the second communication signal in the form of the PLC signal and/or during AC bidirectional charging and/or DC charging. For example, their transceivers or other components may be configured accordingly, e.g. according to the CCS standard.

According to a second aspect, there is provided a system comprising the connection arrangement of the first aspect of this disclosure, wherein the system comprises the electric vehicle, the charger, a charging cable, and/or a charging connector (meaning any arbitrary combination of two, three or all of these devices or systems), and wherein the connection arrangement is comprised in the electric vehicle, the charger, the charging cable, and/or the charging connector (meaning any arbitrary combination of two, three or all of these devices or systems).

In an example, the system may comprise one or more communication transceivers comprised in the electric vehicle and/or the charger, wherein the one or more communication transceivers are configured to transmit the first communication signal via the inner conductor portion in a first direction and transmit the second communication signal via the outer conductor portion and/or the protective earth conductor in a second direction opposite to the first direction.

In an example, the one or more power conductors inside the electric vehicle may comprise a shielding and the outer conductor portion inside the charging cable may be configured as a shielding of the inner conductor portion.

According to a third aspect, there is provided a use of a connection arrangement of the first aspect of this disclosure or of the system of the second aspect of this disclosure for charging the electric vehicle.

A further aspect may be relating to a method of charging the electric vehicle, wherein the connection arrangement of the first aspect of this disclosure or the system of the second aspect of this disclosure is being used for the charging of the electric vehicle.

In particular, the electric vehicle may be charged using AC bidirectional charging and/or DC charging; transmitting the second communication signal in the form of a power line communication signal in a frequency range of 1.8 to 28 MHz; and/or using a combined charging system, CCS, standard with the communication line as a CCS control pilot and/or PLC conductor.

It is that the above examples may be combined with each other irrespective of the aspect involved. Accordingly, the use or method may be combined with structural features and, likewise, the connection arrangement and the system may be combined with features described above regarding the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figures 1 to 3: show illustrations of alternative systems comprising an electric vehicle, a charger, a charging cable, and a charging connector;
- Figure 4: shows a side view of a part of an alternative of a charging cable in Fig. 2 or 3;
- Figures 5 to 7: show different views of an alternative of a conductive connector usable in the charging cable of Fig. 4;
- Figures 8 to 9: show different views of an alternative of a conductive connector usable in the charging cable of Fig. 4;
- Figure 10: shows a cross-sectional view of a stand-off ring usable in the charging cable of Fig. 4;
- Figure 11: shows a cross-sectional view through a part of the charging cable of Fig. 4 including the adapter of Figs. 8 to 9 and the stand-off ring of Fig. 10;
- Figure 12: shows a frontal view of a charging connector for the charging cable of Fig. 11;
- Figure 13: shows a perspective view of the conductive connector of Figs. 8 and 9 attached to a resistor for connection to a PP line;
- Figure 14: shows a cross-sectional view through a part of an alternative system shown in Fig. 17;
- Figure 15: shows a cross-sectional view perpendicular to the cross-sectional view of the charging cable part of Fig. 14;
- Figure 16: shows a perspective view of an alternative of a resistor connection in the charging cable part of Fig. 14; and
- Figure 17: shows an illustration of a system comprising an electric vehicle, a charger, a charging cable with a combined protective earth lead with an inner signal communication line, and a charging connector as alternative to the system of Figs. 1 to 3.

### DETAILED DESCRIPTION

The Figures are merely schematic representations and serve only to illustrate examples of the disclosure.

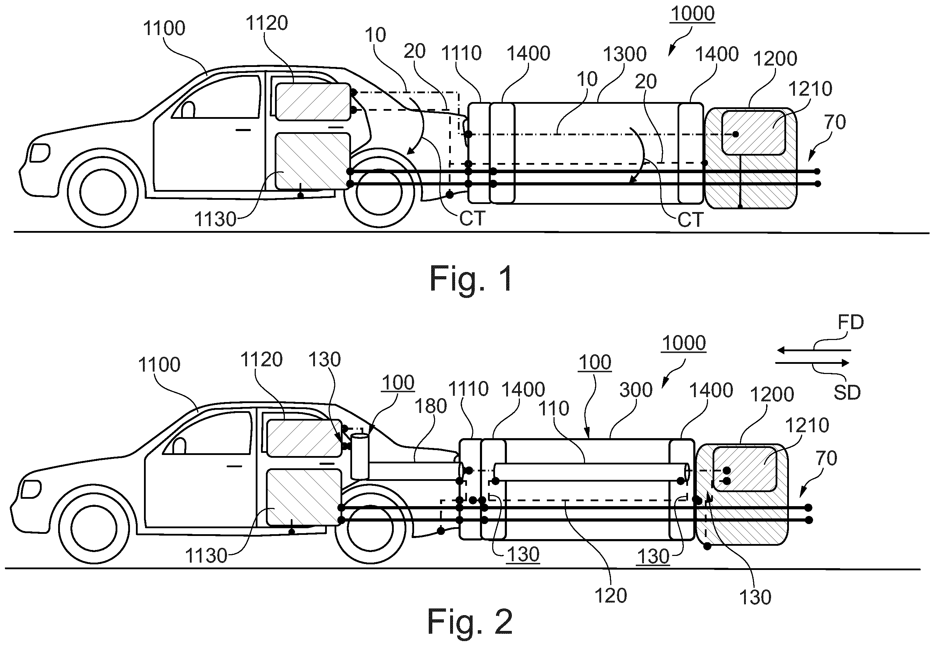

Figure 1 shows a system 1000 comprising a charging cable 1300 comprising charging connectors 1400 connecting an electric vehicle 1100 to a charger 1200. In this example, the charging connector 1400 at the electric vehicle 1100 is connected to an electric vehicle inlet 1110 of the electric vehicle 1100. Also, in this example, the charger 1200 is exemplary configured as a wall box connecting to an electric grid (not shown). Therefore, the charging cable 1300 is connected to the charger 1200 by a charging connector 1400. However, alternatively, the charging cable 1300 may be fixedly installed or connected to the charger 1200 without a charging connector 1400, e.g. of a CCS type. For example, this may be the case when the charger 1200 is in the form of a charging station.

In Fig. 1, two power conductors 70, a communication line 10, and a protective earth line 20 extend through the electric vehicle 1100, the charging cable 1300 and the charger 1200.

The power conductors 70 are configured for transmitting a charging current between the charger 1200 and the electric vehicle 1100. For this purpose, they are connected to an on-board charger 1130, OBC, of the electric vehicle 1100.

The communication line 10 is configured for transmitting a first communication signal between the charger 1200 and the electric vehicle 1100. Ends of the communication line 10 and the protective earth line 20 are connected to a transceiver 1120 of the electric vehicle 1100. An opposite end of the communication line 10 is connected to a transceiver 1210 of the charger 1200. One opposite end of the protective earth line 20 is connected to ground, in the shown example to a vehicle chassis of the electric vehicle 1100. Another opposite end of the protective earth line 20 is connected to the charger 1200.

The transceivers 1120, 1210 may be CP and/or PLC transceivers 1120, 1210. Similarly, the communication line 10 may be a CP and/or PLC line or lead, which may have or be connected to pins, e.g., in the charging connectors 1400.

For the system in Fig. 1 it has been found that a high crosstalk, CT, can be caused during charging, specifically with bidirectional AC Mode 3 charging. Specifically, the PLC communication signal may be propagating to the power lines 70 by CT as schematically indicated in Fig. 1. This signal could be regarded as noise on the power side. To counter this, the solutions as described herein in the Figs. 2 to 17 are proposed. However, as described herein, these solutions may also be advantageous for DC Mode 4 charging, for example.

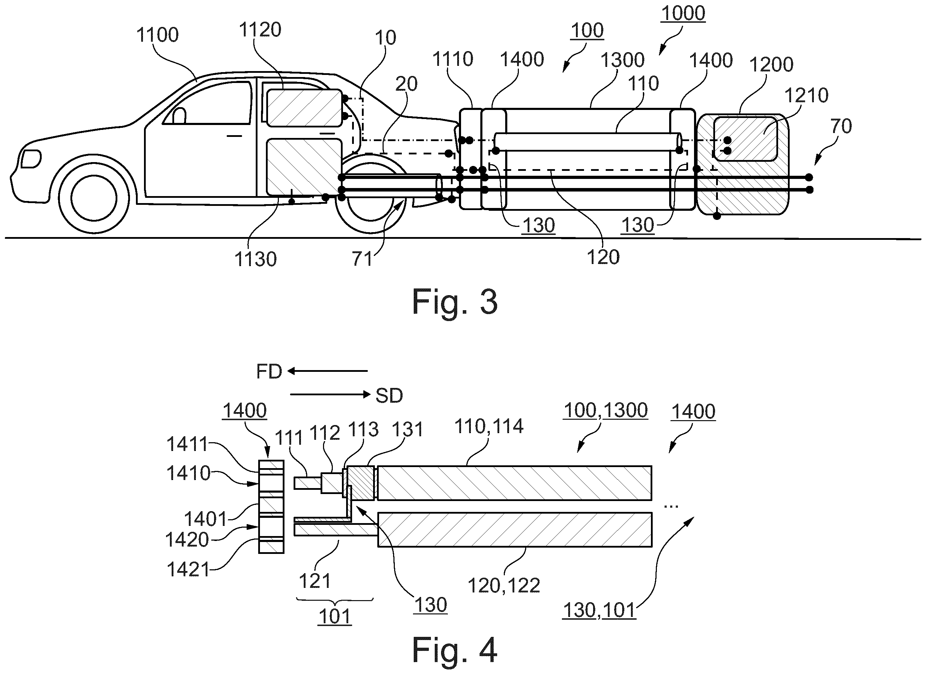

Figures 2 and 3 show a solution of a connection arrangement 100 using conductive connectors 130, which are exemplary located in the charging cable 1300 in Figs. 2 and 3 but can alternatively or additionally be located inside the electric vehicle 1100, the charging connectors 1400, and/or the charger 1200, for example. Generally, as explained with reference to Fig. 1, a communication line 10 and a protective earth line 20 may be extending through the system 1000, specifically from the electric vehicle 1100, through the charging connectors 1400 and charging cable 1300 to the charger 1200. The connection arrangement 100 can be provided at any one or more of these devices or systems within or in between the communication line 10 and the protective earth line 20.

Fig. 2 specifically shows a shielded signal system 1000 in Mode 3 charging, with a communication conductor 110 in the form of a coaxial cable comprising a shielding in the form of an outer conductor portion 113 surrounding an inner conductor portion 111 of the coaxial cable provided in the electric vehicle 1100 (see Fig. 4 for the conductor portions 111, 113 of the communication conductor 110), the charging cable 1300, and/or the charging connectors 1400. In Fig. 3, shielding 71 is provided additionally on the power conductors 70 inside the electric vehicle 1100.

Figure 4 shows a part of the charging cable 1300, in which, according to the examples of Fig. 2 and 3, a conductive connector 130 is provided. Specifically, two conductive connectors 130 may be provided at ends with opposite connection portions 101 of the charging cable 1300 as shown exemplary in Fig. 4 for a left end and indicated for a right end, which is not shown here. The charging cable 1300 in this example has the protective earth conductor 120 with a protective earth wire 121 and a protective earth insulation 122 surrounding it. Further, the charging cable 1300 has the communication conductor 110.

In this example, the communication conductor 110 is a coaxial cable comprising an inner conductor portion 111 and an outer conductor portion 113 forming a shield, wherein the one or more conductive connectors 130 are connected to the outer conductor portion 113 of the coaxial cable. An inner insulation 112 separates the inner conductor portion 111 from the outer conductor portion 113. The communication conductor 110 further has an outer insulation 114 surrounding the outer conductor portion 113. The outer conductor portion 113 may act as a shield for the inner conductor portion 111, through which the CP and/or PLC communication signal may be transmitted, in particular in a first direction FD from the charger 1200 to the electric vehicle 1100. A second communication signal may be transmitted back through the outer conductor portion 113 in a second direction SD opposite to the first direction FD from the electric vehicle 1100 to the charger 1200.

The crosstalk between signal and power system is reduced in Fig. 2 by creating a system shielding using the combination of the coaxial cable shielding, the conductive connectors 130 at each end portion, the respective protective earth pin in each of the charging connectors 1400, and the respective signal return pins on the transceivers 1210, 1120. The conductive connectors 130, in combination with the ground pin in the connector 1400, may form a connecting bridge between the coaxial shields, having a sufficiently low impedance for the operating frequency range of interest. The corresponding shielding effect is achieved in Fig. 3, with a part of the shield transferred from the communication side to the power conductor (e.g. inside the electric vehicle 1100 as shown in Fig. 3). The AC power shield may be connected to the chassis with one of the conductive connectors 130.

Fig. 4 further shows a cross-sectional view of a part of the interface between the charging connector 1400 and the charging cable 1300. Specifically, the charging connector 1400 comprises a charging connector body 1401 with charging connector inlets 1410, 1420 configured with conductive inlet parts 1411, 1421 for connection to the ends of the respective lines 10, 20, specifically the inner conductor portion 111 and the protective earth wire 121, which may be or thereby form pins of the charging connector 1400.

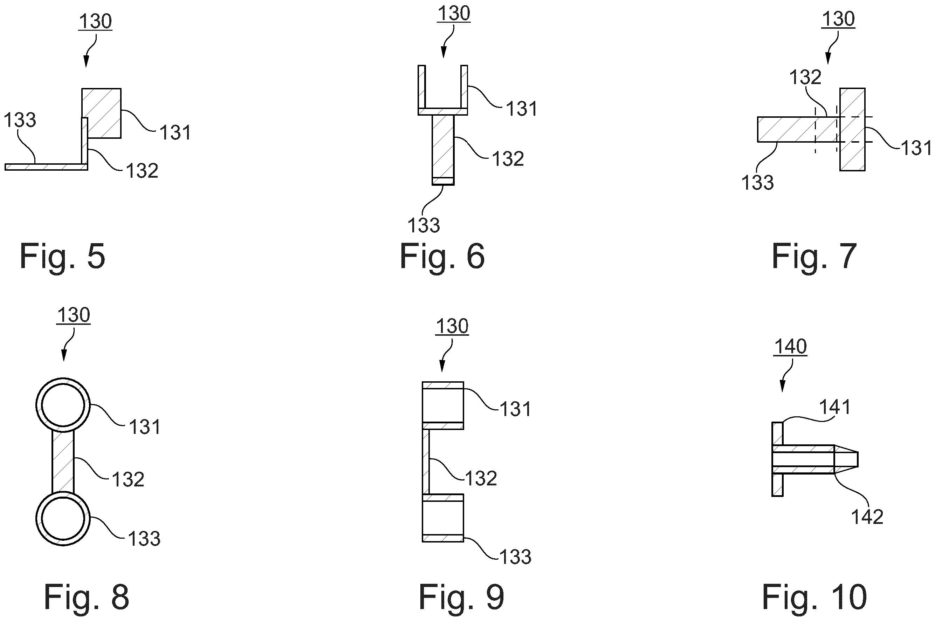

Figures 5 to 9 show configurations of the conductive connector 130, where the conductive connector is made from an electrically conductive material sheet, which comprises a folded geometry. The conductive connector 130 in each one of the shown two alternatives of Figs. 5 to 7 and Figs. 8 to 9 comprises a first connector section 131, a second connector section 132, and a third connector section 133.

The first connector section 131 in Figs. 5 to 7 is formed as a clipping part to be clipped to the outer conductor 113. Accordingly, the first connector section 131 has an open geometry as can be seen in Fig. 6 showing a frontal view whereas Fig. 5 shows a side view and Fig. 7 shows a top view on the unfolded conductive connector 130 before it is folded into the geometry shown in Figs. 5 and 6. The first connector section 131 is connected by the second connector section 132 as an intermediate section to the third connector section 133, which is formed to be connected to the protective earth wire 121. In Figs. 5 to 7, the third connector section 133 is exemplary shown to be formed as a sheet, similar to the second connector section 132.

On the other hand, the first connector section 131 and the third connector section 133 in Figs. 8 and 9 are formed as crimping parts in the form of rings, which can be crimped onto the outer conductor portion 113 and the protective earth wire 121. Fig. 8 in that regard shows a frontal view and Fig. 9 shows a cross-sectional view through the conductive connector 130. Of course, the alternatives of Figs. 5 to 7 and Figs. 8 and 9 may be arbitrarily mixed with one another in terms of the first and second connector sections 131, 133. For example, any one of these sections 131, 133 may be a crimped part and the other one may be a clipped part. In any case, the conductive connector 130 may be easily and securely attached to the respective conductor by applying a force onto the respective section 131, 133, thereby crimping or clipping the conductive connector 130 thereto.

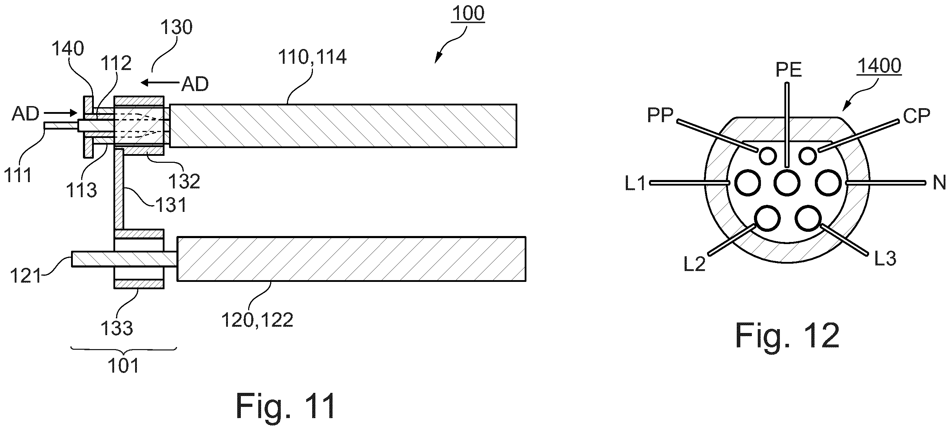

Figure 10 shows a cross-sectional view of a stand-off ring 140 that may be optionally used in conjunction with the conductive connector 130 and be located at an end of the communication conductor 110 opposite of the respective section 131, 133 provided on the inner conductor portion 111, as may be seen in Figure 11. The stand-off ring 140 has a stand-off wall 141 and a stand-off receiving portion 142 for receiving the outer conductor portion 111 with the inner insulation 112 therein. Here, the section 131 of the conductive connector 130 and the stand-off ring are assembled following the assembly directions AD.

Figure 12 shows the charging connector 1400 with its pins PP, PE, CP, N, L1, L2, and L3, which can also be referred to as a pinout. Here, the charging connector 1400 is exemplary designed as a type 2 CCS charging connector. A PE pin is connected to or part of the protective earth wire 121. A CP pin is connected to or part of the inner conductor portion 111.

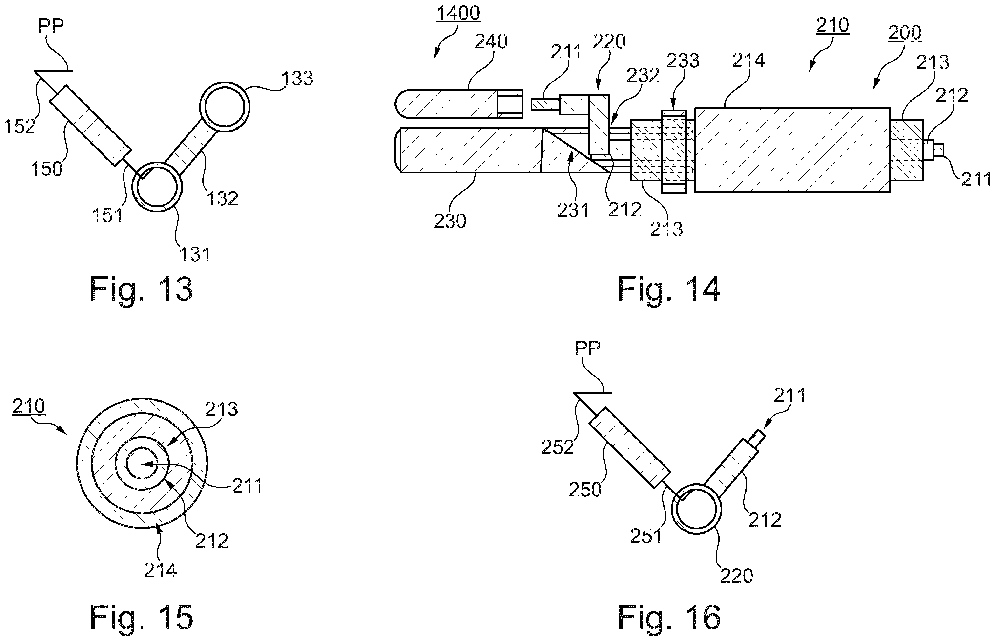

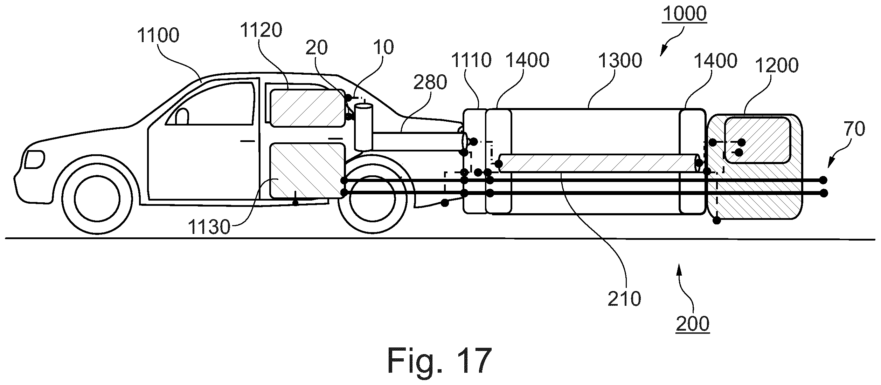

Fig. 17 describes an alternative connection arrangement 200 where the separate protective earth wire and the CP/PLC wire have been replaced by a coaxial arrangement in combination with a modified PE pin 230. In this arrangement, detailed in Figs. 14, 15, 16, the first communication signal is transferred on the inner conductor portion 111, in particular a center lead, and the second communication signal is transferred on the outer conductor portion 113, in particular an outer lead. The outer conductor portion 113 also provides the protective earth function being a protective earth lead, and for that purpose it has a sufficient cross-sectional area. The shielding between signal and power is therefore achieved with one wire less, compared to Fig. 2 and Fig. 3.

As shown in Fig. 13, the resistor 150 (that is prescribed to be used in the charging system) and its connection 151 is advantageously connected to the protective earth wire 121 by crimping the connection 151 using the conductive connector 130 and its crimping ring 131. The connector 152 is connected to the PP pin.

Figures 14 and 15 show the communication conductor 210 of the alternative connection arrangement 200 that can be used in the system 1000 of any one of Figs. 1 to 3 to reduce the crosstalk as given in Fig. 17.

As further seen in Fig. 14, the communication conductor 210 comprises a split segment 220, in which the coaxial configuration with the conductor portions 211, 213 is split into separate lines or leads for connecting to a protective earth pin 230 and a communication pin 240. Through the split segment 220, the respective conductor portions 211, 213 can be separated from one another such that they may be connected in a conventional and simple manner to another device or part, e.g. inside the charging connector 1400 in case the charging arrangement 200 is provided inside the charging cable 1300. The combined second communication lead and protective earth lead is crimped to the PE pin 230 using the crimping ring 233. The protective earth pin 230 is modified so that it is hollow at the crimping end to allow the inside threading of the inner conductor portion 211. The split segment 220 is routed out through a hole 232 on the side of the PE pin 230. The interior of the PE pin 230 has a slanted slope or surface 231, simplifying the threading of split segment 220 out through the hole 232. The hole 232 and the slope 231 may be created in a single action using a wedge-shaped punching tool, where the removed material from the hole 232 is transferred to become the material for the slope 231. Finally, the inner conductor portion 211 is crimped inside the communication or CP pin 240. The cross section of the coaxial configuration in the form of a coaxial cable is shown in Fig. 15.

As shown in Fig. 16, the resistor 250 (that is prescribed to be used in the charging system) and its connection 251 is advantageously connected to the protective earth wire that is the outer conductor portion 213 by crimping the connection 251 using the crimping ring 233. The connector 252 is connected to the PP pin.

In a Mode 3 charging cable, the PE wire may be accordingly replaced by the coaxial configuration or cable described above, where the protective earth function may be maintained by keeping the same cross-sectional area of the outer conductive portion 213 or coaxial lead. This outer lead fulfills two functions: it provides the PE lead and the signal return for the PLC signal or second communication signal. The modified ground or PE pin 230 can replace the existing pin and provide the following: The PE lead (outer conductive portion or lead of the coaxial configuration) is crimped to the exterior of the pin using the crimp ring 233. The inner or center conductor portion 211 or lead (for the first communication signal) is routed out from the center through the hole 232, on the side to allow the split segment 220 to be routed out to pin 240. The hole 232 can be punched in such way that the punched-out material forms the slanted surface or slope 231 inside the PE pin 230. This slope 231 can ensure a secured way of threading the split segment 220 without getting stuck.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of", in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]".

Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

Any designation of methods, steps and elements as first, second, etc. or similar as provided herein is merely intended to make the methods, their steps and elements referenceable and distinguishable from one another. By no means does the designation of methods, steps and elements constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the examples of the disclosure described herein are capable of operation in other sequences than described or illustrated herein.

In the context of the present disclosure any numerical value indicated is typically associated with an interval of accuracy that the person skilled in the art will understand to still ensure the technical effect of the feature in question. As used herein, the deviation from the indicated numerical value is in the range of ± 10%, and preferably of ± 5%. The aforementioned deviation from the indicated numerical interval of ± 10%, and preferably of ± 5% is also indicated by the terms "about" and "approximately" used herein with respect to a numerical value.

Any reference signs in the claims should not be construed as limiting the scope of the claims.

### LIST OF REFERENCE SIGNS

- 10: communication line
- 20: protective earth line
- 70: power conductor
- 71: shielding
- 100: connection arrangement
- 101: connection portion
- 110: communication conductor
- 111: inner conductor portion
- 112: inner insulation of communication conductor
- 113: outer conductor portion
- 114: outer insulation of communication conductor
- 120: protective earth conductor
- 121: protective earth wire
- 122: protective earth insulation
- 130: conductive connector
- 131: first connector section
- 132: second connector section
- 133: third connector section
- 140: stand-off ring
- 141: stand-off wall
- 142: stand-off receiving portion
- 150: resistor
- 151: resistor connection
- 152: resistor connection
- 200: connection arrangement
- 210: communication conductor
- 211: inner conductor portion
- 212: inner insulation of communication conductor
- 213: outer conductor portion
- 214: outer insulation of communication conductor
- 220: split segment
- 230: modified protective earth pin
- 231: slanted portion inside modified protective earth pin
- 232: hole inside modified protective earth pin providing an exit for the split segment
- 233: crimping ring
- 240: communication pin
- 250: resistor
- 251: resistor connection
- 252: resistor connection
- 280: shielding
- 1100: electric vehicle
- 1110: electric vehicle inlet
- 1120: transceiver of the electric vehicle
- 1130: on-board charger
- 1200: charger
- 1210: transceiver of the charger
- 1300: charging cable
- 1400: charging connector
- 1401: charging connector body
- 1410: charging connector inlet (communication pin hole in connector)
- 1411: conductive inlet part (communication pin conductive part in connector)
- 1420: charging connector inlet (protective earth pin hole in connector)
- 1421: conductive inlet part (protective earth pin conductive part in connector)
- 1000: system
- AD: assembly direction
- FD: first direction
- SD: second direction
- CT: crosstalk

## Claims

1. A connection arrangement (100, 200) comprising:
- one or more power conductors (70) configured for transferring a charging current between a charger (1200) and an electric vehicle (1100);
- a communication conductor (110, 210), wherein the communication conductor (110, 210) comprises a coaxial configuration with an inner conductor portion (111, 211) configured for transmitting a first communication signal between the charger (1200) and the electric vehicle (1100) and an outer conductor portion (113, 213) configured for transmitting a second communication signal between the charger (1200) and the electric vehicle (1100), wherein the first communication signal and the second communication signal are configured for managing the transfer of the charging current between the charger (1200) and the electric vehicle (1100).

2. The connection arrangement (100) of claim 1, wherein the connection arrangement (100) comprises one or more conductive connectors (130), wherein the one or more conductive connectors (130) connect a protective earth conductor (120) of the connection arrangement (100) with the outer conductor portion (113) for transmitting the second communication signal.

3. The connection arrangement (100) of claim 2, wherein the one or more conductive connectors (130) are located at a connection portion (101) of the connection arrangement (100) connecting the electric vehicle (1100) to a charging connector (1400), the charger (1200) to the charging connector (1400), a charging cable (1300) to the charging connector (1400), the charging connector (1400) to the electric vehicle (1100) or the charger (1200), or the outer conductor portion (113) to a transceiver (1120, 1210) inside the electric vehicle (1100) and/or inside the charger (1200).

4. The connection arrangement (100) of claim 2 or 3, wherein the one or more conductive connectors (130) are crimped or clipped to the outer conductor portion (113).

5. The connection arrangement (100) of any one of claims 2 to 4, wherein each one of the one or more conductive connectors (130) comprises a length in the range of 2 to 50 mm.

6. The connection arrangement (100) of any one of claims 2 to 5, wherein the one or more conductive connectors (130) are made from an electrically conductive material sheet, wherein the electrically conductive material sheet comprises a folded geometry.

7. The connection arrangement (200) of claim 1, wherein the outer conductor portion (213) is configured as a protective earth conductor for connecting a chassis of the electric vehicle (1100) to the charger (1200).

8. The connection arrangement (200) of claim 7, wherein the connection arrangement (200) comprises a split segment (230), in which the coaxial configuration of the inner conductor portion (211) and outer conductor portion (213) are adapted for connecting an end of the outer conductor portion (213) to a protective earth pin (250) and an end of the inner conductor portion (211) to a communication pin (240).

9. The connection arrangement (100, 200) of any one of the previous claims, wherein the connection arrangement (100, 200) is configured according to a combined charging system, CCS, standard, wherein the inner conductor portion (111, 211) is configured as a CCS control pilot and/or Power Line Communication, PLC, conductor.

10. The connection arrangement (100, 200) of any one of the previous claims, wherein the outer conductor portion (113, 213) is configured for transmitting the second communication signal in the form of a PLC signal in a frequency range of 1.8 to 28 MHz.

11. The connection arrangement (100, 200) of any one of the previous claims, wherein the outer conductor portion (113, 213) is configured for transmitting the second communication signal during AC bidirectional charging and/or DC charging.

12. A system (1000) comprising the connection arrangement (100, 200) of any one of the previous claims, wherein the system (1000) comprises the electric vehicle (1100), the charger (1200), a charging cable (1300), and/or a charging connector (1400), and wherein the connection arrangement (100, 200) is comprised in the electric vehicle (1100), the charger (1200), the charging cable (1300), and/or the charging connector (1400).

13. The system (1000) of claim 12, wherein the one or more power conductors (70) inside the electric vehicle (1100) comprise a shielding (71), and wherein the outer conductor portion (113, 213) inside the charging cable (1300) is configured as a shielding of the inner conductor portion (111, 211).

14. Use of a connection arrangement (100, 200) of any one of claims 1 to 11 or of the system (1000) of any one of claims 12 and 13 for charging the electric vehicle (1100).

15. The use of claim 14, wherein the electric vehicle (1100) is charged,
- using AC bidirectional charging and/or DC charging;
- transferring the second communication signal in the form of a power line communication signal in a frequency range of 1.8 to 28 MHz; and/or
- using a combined charging system, CCS, standard with the inner conductor portion (111, 211) as a CCS control pilot and/or Power Line Communication, PLC, conductor.
